# EUROPÄISCHE PATENTANMELDUNG

(11) **EP 2 525 566 A2**
(43) Veröffentlichungstag der Anmeldung: **21.11.2012**
(21) Anmeldenummer: 12167937.7
(22) Anmeldetag: 14.05.2012
(51) Int. Cl.: H04N 5/3745

(54) **Bildsensor**

(30) Priorität: 16.05.2011 DE 102011101835
(71) Anmelder: ARNOLD & RICHTER CINE TECHNIK GMBH & CO. BETRIEBS KG, 80799 München (DE)
(72) Erfinder: Cieslinski, Michael, 85521 Ottobrunn (DE)
(74) Vertreter: Manitz, Finsterwald & Partner GbR

(57) **Zusammenfassung**

Ein Bildsensor, insbesondere CMOS-Bildsensor, für elektronische Kameras umfasst eine Vielzahl von lichtempfindlichen Pixeln zur Erzeugung von belichtungsabhängigen Pixelsignalen, wobei die Pixel in Zeilen und Spalten eines Bildfeldes angeordnet sind. Ein jedes Pixel umfasst zumindest ein lichtempfindliches Element, um aus einfallendem Licht elektrische Ladung zu erzeugen, und einen Wandler-Transistor, um eine von dem lichtempfindlichen Element erzeugte Ladung in ein Spannungssignal an einem Ausgang des Wandler-Transistors umzuwandeln. Die Pixel bilden mehrere Pixelgruppen, wobei jeder Pixelgruppe mehrere Pixel zugeordnet sind und wobei den mehreren Pixeln einer jeden Pixelgruppe zumindest eine gemeinsame Ausleseschaltung zugeordnet ist, welche mit dem Ausgang des jeweiligen Wandler-Transistors der Pixel der Pixelgruppe koppelbar ist und welcher eine Verstärkerschaltung zur Erzeugung von verstärkten Spannungssignalen aus den Spannungssignalen umfasst. Die Verstärkerschaltung der jeweiligen Pixelgruppe ist innerhalb des Bildfeldes angeordnet.

## Beschreibung

Die vorliegende Erfindung betrifft einen Bildsensor, insbesondere CMOS-Bildsensor, für elektronische Kameras, mit einer Vielzahl von lichtempfindlichen Pixeln zur Erzeugung von belichtungsabhängigen Pixelsignalen. Die Pixel sind in Zeilen und Spalten eines Bildfeldes angeordnet, wobei ein jedes Pixel zumindest ein lichtempfindliches Element, um aus entlang einer Belichtungsrichtung einfallendem Licht elektrische Ladung zu erzeugen, und einen Wandler-Transistor umfasst, um eine von dem lichtempfindlichen Element erzeugte Ladung in ein Spannungssignal an einem Ausgang des Wandler-Transistors umzuwandeln. Die Pixel bilden mehrere Pixelgruppen, wobei jeder Pixelgruppe mehrere Pixel zugeordnet sind, und wobei den mehreren Pixeln einer jeden Pixelgruppe zumindest eine gemeinsame Ausleseschaltung zugeordnet ist, welche mit dem Ausgang des jeweiligen Wandler-Transistors der Pixel der Pixelgruppe koppelbar ist und welche eine Verstärkerschaltung zur Erzeugung von verstärkten Spannungssignalen aus den Spannungssignalen umfasst.

Eine elektronische Kamera wird beispielsweise dazu verwendet, um Bildsequenzen digital aufzuzeichnen, die später in einem Kino vorgeführt werden. Dabei ist es wünschenswert, dass die Kamera neben einer hohen Auflösung und einer hohen Bildfrequenz auch eine hohe Bildqualität aufweist. Für die Erzielung der gewünschten Bildqualität wird angestrebt, den Rauschanteil in den Pixelsignalen zu minimieren und mögliche Pixelfehler, die beispielsweise auf Nichtlinearitäten bei der Erzeugung der Pixelsignale beruhen, weitgehend zu vermeiden. Insbesondere bei der Projektion auf große Leinwände ist eine mangelhafte Bildqualität für den Betrachter leicht zu erkennen.

Der Bildsensor einer elektronischen Kamera wandelt durch das Objektiv der Kamera fallendes Licht in elektrische Signale um und umfasst eine Vielzahl von lichtempfindlichen Elementen, die sogenannten Pixel, die üblicherweise in Zeilen und Spalten angeordnet sind und das Bildfeld bilden. Typischerweise werden auf Siliziumbasis in CMOS-Technologie hergestellte Bildsensoren verwendet.

Zum Auslesen eines von der Kamera aufgenommenen Bildes werden die Pixel beispielsweise zeilenweise adressiert, und es wird eine zu der Ladung des jeweiligen Pixels proportionale Spannung erzeugt, die zu einem Ausgang des Bildsensors geleitet wird. Die in einer jeweiligen Spalte angeordneten Pixel sind wenigstens einer gemeinsamen Spaltenleitung zugeordnet und mit dieser wahlweise verbindbar. Die Spaltenleitungen bilden den sogenannten Spaltenbus und leiten die Signale der Pixel zu einer am Rand des Bildfelds angeordneten Signalverarbeitungsschaltung.

Das Auslesen derartiger Bildsensoren kann in verschiedenen Betriebsarten erfolgen. Zum einen ist der sogenannte Rolling-Shutter-Modus bekannt, bei dem die einzelnen Zeilen des Bildsensors sequentiell nacheinander belichtet werden und jede Zeile am Ende der Belichtung ausgelesen wird. Die Steuerung der Belichtung erfolgt in bekannter Weise dadurch, dass vor Beginn der Belichtung die in den zu belichtenden Pixeln angesammelte Ladung durch Verbindung des Pixels mit einem Rücksetzpotential gelöscht wird und während der vorgegebenen Belichtungszeit die im lichtempfindlichen Element erzeugte Ladung akkumuliert wird. Nach Ablauf der Belichtungszeit wird die im lichtempfindlichen Element akkumulierte Ladung an den Wandler-Transistor transferiert und von diesem in ein entsprechendes Spannungssignal umgewandelt, welches über die Spaltenleitung an die Signalverarbeitungsschaltung transferiert wird und dort verstärkt und verarbeitet wird. Die Verarbeitung des Spannungssignals kann insbesondere die Bildung einer Differenz mit einem vom jeweiligen Pixel ohne Belichtung erzeugten Referenzsignal umfassen, was als "Correlated Double Sampling" (CDS) bezeichnet wird und beispielsweise in DE 10 2007 045 448 A1 ausführlich erläutert ist. In der Signalverarbeitungsschaltung kann darüber hinaus auch eine Wandlung der Spannungssignale in digitale Signale erfolgen.

Im Rolling-Shutter-Modus werden demnach die einzelnen Zeilen des Bildfeldes zeitversetzt belichtet, wobei die für das Auslesen eines Pixels bzw. einer Zeile von Pixeln benötigte Zeit den Zeitversatz vorgibt, der zwischen den einzelnen Zeilen des Bildfeldes auftritt. Beispielsweise kann bei einem Bildsensor mit 1080 Zeilen und einer Bildfrequenz von 30 Bildern pro Sekunde die für das Auslesen einer Zeile benötigte Zeit ungefähr 30 μs betragen. Zwischen dem Auslesen der ersten und der letzten Zeile des Bildfeldes entsteht somit ein Zeitversatz von ungefähr 33 ms. Dieser Zeitversatz führt bei der Aufnahme von bewegten Objekten zu einer Verzerrung des bewegten Objekts, was vom Betrachter als Verformung wahrgenommen wird. So erscheinen rotierende, an sich gerade Rotorblätter eines Helikopters bei der Wiedergabe der Bildsequenz als gekrümmt.

Um derartige Verformungs-Artefakte zu vermeiden, werden Bildsensoren eingesetzt, die im sogenannten Global-Shutter-Modus betrieben werden. Im Global-Shutter-Modus werden alle Pixel des Bildsensors zum gleichen Zeitpunkt belichtet. Am Ende der Belichtungszeit wird die in jedem Pixel angesammelte Ladung an einen dem jeweiligen Pixel zugeordneten Speicherkondensator übertragen und dort zwischengespeichert bzw. in eine proportionale Spannung umgewandelt, welche dann zwischengespeichert wird. Die zwischengespeicherten Signale werden anschließend zeilenweise sequentiell ausgelesen.

Bildsensoren für den Global-Shutter-Modus weisen jedoch eine komplexere Struktur auf, da die benötigten Speicherkondensatoren zusätzlichen Platz im jeweiligen Pixel beanspruchen. Dies führt letztendlich zu einer Reduzierung der Fläche des jeweiligen lichtempfindlichen Elements, so dass sich die Empfindlichkeit und Dynamik des Bildsensors bei gleichzeitiger Erhöhung des Rauschens verringert.

Es ist daher die Aufgabe der Erfindung, einen Bildsensor mit verbesserter Bildqualität zu schaffen.

Die Lösung der Aufgabe erfolgt durch einen Bildsensor mit den Merkmalen des Anspruchs 1 und insbesondere dadurch, dass die Verstärkerschaltung der jeweiligen Pixelgruppe in Projektion entlang der Belichtungsrichtung der Pixel betrachtet innerhalb des Bildfeldes angeordnet ist.

Bei dem erfindungsgemäßen Bildsensor ist somit für jede Pixelgruppe zusätzlich zu den mehreren Wandler-Transistoren, die für jedes Pixel eine Ladungs-Spannungs-Wandlung bewirken, eine gemeinsame Verstärkerschaltung vorgesehen, die für das jeweilige Spannungssignal am Ausgang der Wandler-Transistoren der mehreren Pixel eine Spannungsverstärkung bewirkt. Diese gemeinsame Verstärkerschaltung (oder Gruppenverstärker) ist - im Unterschied beispielsweise zu einem herkömmlichen Spaltenverstärker - bezogen auf eine Projektion entlang der Belichtungsrichtung der Pixel innerhalb des Bildfeldes angeordnet, insbesondere unterhalb der Vielzahl von in Zeilen und Spalten angeordneten Pixeln.

Durch die Anordnung der Verstärkerschaltung innerhalb des Bildfeldes verkürzen sich gegenüber einem Bildsensor, bei dem die Verstärkerschaltung außerhalb des Bildfeldes vorgesehen ist, die Leitungswege. Dadurch verringert sich die Gefahr, dass sich dem am Ausgang des jeweiligen Wandler-Transistors erzeugten Spannungssignal während der Übertragung zur Verstärkerschaltung Störsignale überlagern und damit zu einer Verschlechterung der Signalqualität führen. Da die Verstärkerschaltung einen Teil der gemeinsamen Ausleseschaltung bildet, steht für die Verstärkerschaltung einer jeweiligen Pixelgruppe mehr Platz zur Verfügung als wenn für jedes Pixel eine eigene Verstärkerschaltung vorgesehen ist. Die Verstärkerschaltungen des erfindungsgemäßen Bildsensors können somit einen relativ aufwendigen Aufbau und eine demensprechend höhere Qualität besitzen.

Zugleich können - je nach Größe der Pixelgruppen - mehr Verstärkerschaltungen vorgesehen sein als die maximale Anzahl von Spaltenverstärkern eines herkömmlichen CMOS-Bildsensors. Bei einem herkömmlichen Bildsensor sind die Spaltenverstärker am Rand des Sensors außerhalb des Bildfelds angeordnet. Die Anzahl der Spaltenverstärker entspricht typischerweise der Anzahl der Spalten von Pixeln und beträgt maximal das Doppelte oder das Vierfache der Spaltenzahl (bei geteilten Spalten und zwei Spaltenleitungen je Spalte). Bei dem erfindungsgemäßen Bildsensor besteht diese Begrenzung nicht, sondern die Anzahl der genannten Spaltenverstärker kann höher gewählt werden. Hierdurch kann die Ausleserate erhöht werden, da die Ausleserate eines Bildsensors nicht nur durch die jeweilige Belegungszeit der Spaltenleitungen, sondern auch durch die Einschwingzeiten der Verstärker begrenzt ist. Vor allem kann der beim Auslesen eines vollständigen Bildes akkumulierte zeitliche Versatz hierdurch so weit verringert werden, dass er deutlich unter der Belichtungszeit liegt und die vorgenannten Verformungs-Artefakte eines Rolling-Shutter vermieden werden können.

Gemäß einer bevorzugten Ausführungsform der Erfindung weist die jeweilige Verstärkerschaltung ferner für jedes Pixel der zugeordneten Pixelgruppe wenigstens eine Speichereinrichtung zur Zwischenspeicherung der verstärkten Spannungssignale auf. Hierbei werden die Pixel einer Pixelgruppe nacheinander adressiert, um die Spannungssignale auszulesen, zu verstärken und in der jeweiligen Speichereinrichtung zwischenzuspeichern. Dies kann mit einer relativ hohen Geschwindigkeit erfolgen, so dass nur ein sehr geringer Zeitversatz beim Auslesen der Pixel innerhalb einer Pixelgruppe entsteht und Verformungs-Artefakte ähnlich wirkungsvoll reduziert werden wie bei einem Bildsensor, der im Global-Shutter-Modus betrieben wird. Im Vergleich zu einem solchen Global-Shutter-Bildsensor ist jedoch das Signalrauschen wesentlich reduziert. Da nämlich in jedem Pixel nur ein begrenzter Platz zur Verfügung steht und bei einem herkömmlichen Global-Shutter-Bildsensor bereits ein Teil dieses Platzes für die Speichereinrichtung benötigt wird, wird dort auf einen im Pixel vorgesehenen Verstärker zur Verstärkung der am Ausgang des Wandler-Transistors ausgegebenen Spannungssignale verzichtet und die Spannungssignale werden unverstärkt zwischengespeichert. Im Unterschied dazu ist bei dem erfindungsgemäßen Bildsensor eine der Zwischenspeicherung vorgeschaltete Verstärkung vorgesehen.

Bevorzugt umfasst die jeweilige Ausleseschaltung ferner wenigstens eine Auswerteschaltung, welche zur Auswertung der verstärkten Spannungssignale ausgelegt ist. Die Übertragung der verstärkten Spannungssignale von der Verstärkerschaltung bzw. von den Speichereinrichtungen zu der Auswerteschaltung und die Auswertung der verstärkten Spannungssignale können mit einer relativ geringen Geschwindigkeit erfolgen, insbesondere um ein Mehrfaches langsamer als die Belichtungs- und Auslesevorgänge.

Die Aufteilung der Ausleseschaltung in eine Verstärkerschaltung, die die Spannungssignale der Pixel vorverstärkt und zwischenspeichert, und eine Auswerteschaltung, die die verstärkten und zwischengespeicherten Spannungssignale entgegennimmt, um anschließend die übrigen Signalverarbeitungsschritte vorzunehmen, ermöglicht es, das Auslesen der Pixel einschließlich der Vorverstärkung und die weitere Signalverarbeitung zeitlich und räumlich voneinander zu trennen. Dadurch lässt sich der gesamte Auslesevorgang beschleunigen, d.h. der Zeitversatz zwischen den Belichtungsvorgängen der Pixel einer Pixelgruppe kann so weit vermindert werden, dass die durch die sequentielle Belichtung bedingten Verformungs-Artefakte für einen Betrachter nicht mehr wahrnehmbar sind. Da sich mehrere Pixel eine Verstärkerschaltung teilen, kann diese einen qualitativ hochwertigen und damit platzaufwändigen Verstärker umfassen, ohne dass dafür die für die lichtempfindlichen Elemente zur Verfügung stehende Fläche in unakzeptablem Maße reduziert werden muss.

Die Auswerteschaltung ist vorzugsweise außerhalb des Bildfeldes angeordnet, da dort ausreichender Platz zur Verfügung steht.

Die in der Auswerteschaltung erfolgende Auswertung kann insbesondere eine weitere Verstärkung der verstärkten Spannungssignale umfassen, so dass sich drei Hierarchie-Ebenen der Signalwandlung und -verstärkung ergeben: Die Ladungs-Spannungs-Wandlung durch den Wandler-Transistor des jeweiligen Pixels, die Spannungsverstärkung durch die Verstärkerschaltung der jeweiligen Pixelgruppe innerhalb des Bildfelds, und die nachgeordnete Spannungsverstärkung durch einen Spannungsverstärker außerhalb des Bildfelds.

Ferner kann die in der Auswerteschaltung erfolgende Auswertung eine Abtastung und/oder Analog-Digital-Wandlung der verstärkten Spannungssignale umfassen, aber auch eine Signalverarbeitung im Rahmen des eingangs erläuterten Correlated Double Samplings.

Gemäß einer weiteren bevorzugten Ausführungsform weist die jeweilige Verstärkerschaltung für jedes Pixel der zugeordneten Pixelgruppe, wie bereits erwähnt, wenigstens eine Speichereinrichtung zur Zwischenspeicherung der verstärkten Spannungssignale auf, wobei die jeweilige Ausleseschaltung ferner eine Auswahlschaltung umfasst, um die Speichereinrichtungen der zugeordneten Pixelgruppe sequentiell mit der zugeordneten Auswerteschaltung zu koppeln und hierdurch die zwischengespeicherten verstärkten Spannungssignale sequentiell an die zugeordnete Auswerteschaltung auszugeben. Die Auswahlschaltung kann wahlweise in der Verstärkerschaltung oder in der Auswerteschaltung vorgesehen sein.

Es ist ferner auch möglich, erste und zweite Speichereinrichtungen für jedes Pixel vorzusehen, welche zur Durchführung des Correlated Double Samplings für eine Speicherung eines Referenzsignals und des eigentlichen Bildsignals ausgelegt sind.

Es ist ferner bevorzugt, dass der Bildsensor eine der Anzahl der Pixelgruppen entsprechende Anzahl von mehreren Ausleseschaltungen mit einer jeweiligen Verstärkerschaltung, einer jeweiligen Auswerteschaltung und einer jeweiligen Auswahlschaltung aufweist, wobei der Bildsensor eine Steuereinrichtung aufweist, die dazu ausgelegt ist, zumindest einige der mehreren Ausleseschaltungen simultan anzusteuern. Das sequentielle Ausgeben der jeweiligen zwischengespeicherten verstärkten Spannungssignale an die zugeordnete Auswerteschaltung erfolgt somit simultan für verschiedene Pixelgruppen.

Gemäß einer weiteren vorteilhaften Ausführungsform sind die Pixel auf einem ersten gemeinsamen ersten Halbleiter-Substrat und die Verstärkerschaltungen auf einem gemeinsamen, mit dem ersten Substrat verbundenen zweiten Halbleiter-Substrat angeordnet. Da für die Verstärkerschaltungen ein separates Halbleiter-Substrat vorgesehen ist und zudem für mehrere Pixel nur eine gemeinsame Verstärkerschaltung vorgesehen wird, steht der auf dem ersten Halbleiter-Substrat vorhandene Platz im Wesentlichen für die Pixel und insbesondere für die lichtempfindlichen Elemente zur Verfügung, während der zusätzliche, auf dem zweiten Halbleiter-Substrat vorhandene Platz es ermöglicht, die Verstärkerschaltungen qualitativ besonders hochwertig und damit rauscharm aufzubauen.

Bevorzugt ist das zweite Halbleiter-Substrat entlang der Belichtungsrichtung der Pixel unterhalb des ersten Substrats angeordnet. Dadurch steht für die lichtempfindlichen Elemente der Pixel ein maximaler Platz auf dem ersten Halbleiter-Substrat zur Verfügung, sodass der Bildsensor eine optimale Qualität in Bezug auf eine hohe Empfindlichkeit, eine hohe Signaldynamik und ein niedriges Rauschen aufweist.

Bevorzugt ist das erste Halbleiter-Substrat rückseitenbelichtet. Bei der Herstellung eines rückseitenbelichteten Halbleiter-Substrats erfolgt der Aufbau derart, dass sich die lichtempfindlichen Elemente unmittelbar auf der Rückseite des Substrates befinden, während die übrigen Elemente wie Transistoren und Verbindungsleitungen oberhalb angeordnet werden. Anschließend werden die lichtempfindlichen Elemente durch Ätzen oder Dünnschliff der Rückseite freigelegt. Das rückseitenbelichtete Halbleiter-Substrat wird in dem Bildsensor so angeordnet, dass sich die Rückseite in der Belichtungsrichtung der Pixel betrachtet zuoberst des Bildsensors befindet. Dadurch ergibt sich eine besonders hohe Empfindlichkeit für das einfallende Licht.

Vorzugsweise sind zwischen den Pixeln einer jeweiligen Pixelgruppe Pixel einer anderen Pixelgruppe angeordnet. Pixel verschiedener Pixelgruppen werden dadurch sozusagen räumlich miteinander verschränkt, was die Wahrnehmbarkeit von Artefakten aufgrund des eingangs erläuterten Zeitversatzes zwischen den einzelnen Belichtungen reduziert, insbesondere im Vergleich mit Bildsensoren, bei denen die einzelnen Pixelgruppen auf herkömmliche Weise durch solche Pixel gebildet werden, die mit einer gemeinsamen Spaltenleitung verbunden sind und in einer einzigen Spalte angeordnet sind. Vorzugsweise sind hierbei zwischen den Pixeln der jeweiligen Pixelgruppe sowohl entlang einer Zeilenrichtung als auch entlang einer Spaltenrichtung Pixel einer anderen Pixelgruppe angeordnet, wodurch eine besonders wirkungsvoll räumliche Verschränkung erreicht wird. Die genannte Zeilenrichtung und Spaltenrichtung beziehen sich auf die jeweilige Erstreckungsrichtung der Zeilen und Spalten des Bildfelds. Die genannte Zeilenrichtung und Spaltenrichtung verlaufen typischerweise orthogonal zueinander und orthogonal zu der genannten Belichtungsrichtung.

Es ist bevorzugt, dass jede Pixelgruppe eine Erstreckung von wenigstens zwei Pixeln in Spaltenrichtung und eine Erstreckung von wenigstens zwei Pixeln in Zeilenrichtung aufweist. Dadurch werden Verformungs-Artefakte besonders wirksam eliminiert.

Vorzugsweise sind die Pixel einer jeden Pixelgruppe in einem Muster angeordnet, welches für alle Pixelgruppen des Bildsensors gleich oder im Wesentlichen gleich ist. Hierdurch ergibt sich eine besonders effiziente Verteilung der Pixel einer Pixelgruppe über das Bildfeld. Unter "im Wesentlichen gleich" wird verstanden, dass von einer Mehrzahl von identischen Mustern abweichende Muster hauptsächlich dadurch bedingt sind, dass für am Bildrand befindliche Muster aus geometrischen Gründen abweichende Strukturen erforderlich sind.

Gemäß einer weiteren bevorzugten Ausführungsform der Erfindung umfasst jedes Pixel ferner einen Ausleseknoten, einen Transfer-Transistor (so genanntes Transfer-Gate), um wahlweise das lichtempfindliche Element mit dem Ausleseknoten zu koppeln, und einen Rücksetz-Transistor, um wahlweise den Ausleseknoten mit einem Rücksetzpotential zu koppeln. Insbesondere können die Pixel eine sogenannte Vier-Transistor-Anordnung aufweisen, wie sie zum Beispiel in der DE 10 2007 045 448 A1 beschrieben ist.

Weitere vorteilhafte Ausführungsformen der Erfindung sind in den Unteransprüchen, der Beschreibung und den Zeichnungen angegeben.

Die Erfindung wird nachfolgend anhand eines Ausführungsbeispiels mit Bezug auf die Zeichnungen erläutert. Es zeigen:
- Fig. 1: einen Vier-Transistor-CMOS-Bildsensor gemäß dem Stand der Technik, wobei von dem Bildsensor lediglich ein Pixel und eine der Spaltenleitung des Pixels zugeordnete Spaltenverstärkerschaltung dargestellt sind,
- Fig. 2: eine schematische, ausschnittsweise Querschnittsdarstellung eines CMOS-Bildsensors gemäß der vorliegenden Erfindung,
- Fig. 3: eine schematische Darstellung einer Ausleseschaltung eines CMOS-Bildsensors gemäß der vorliegenden Erfindung, und
- Fig. 4: eine schematische, ausschnittsweise Draufsicht von zwei Ebenen eines CMOS-Bildsensors gemäß der vorliegenden Erfindung.

Die grundlegende Funktionsweise eines beispielhaften herkömmlichen Vier-Transistor-Bildsensors des APS-Typs (aktiver Pixelsensor), wie er bei dem nachfolgend erläuterten Ausführungsbeispiel zur Anwendung gelangt, ist ausführlich in DE 10 2007 045 448 A1 beschrieben. Grundsätzlich ist die vorliegende Erfindung jedoch nicht auf aktive Vier-Transistor-Bildsensoren beschränkt, sondern kann auch bei Bildsensoren mit weniger oder mehr als vier Transistoren je Pixel zum Einsatz kommen.

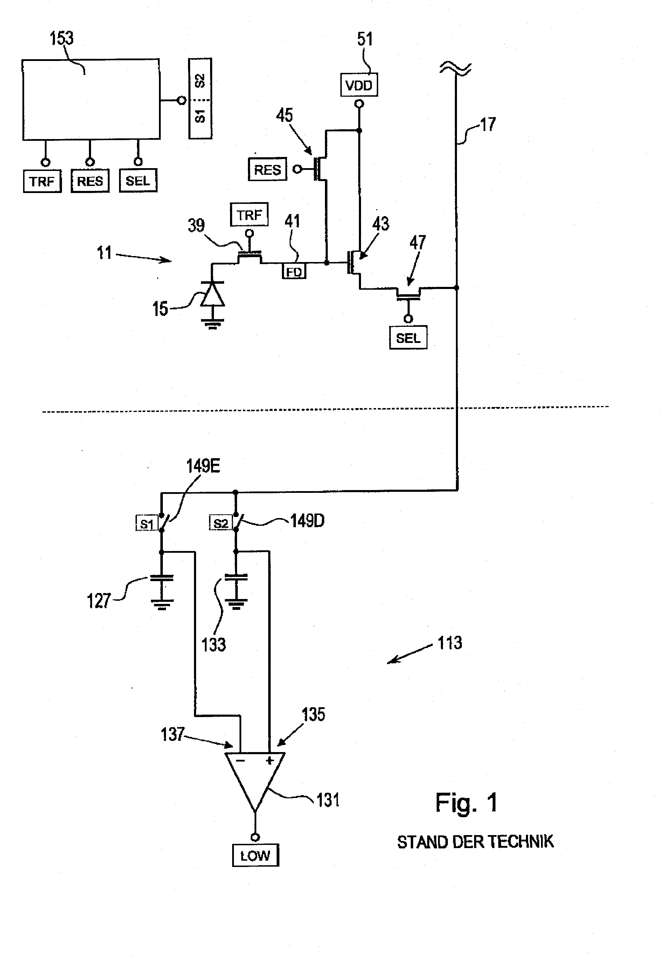

Zum besseren Verständnis der Erfindung wird ein derartiger Vier-Transistor-CMOS-Bildsensor mit Bezug auf Fig. 1 erläutert, wobei einzelne Komponenten dieses Bildsensors auch bei einem erfindungsgemäßen Bildsensor vorhanden sind.

In Fig. 1 ist stellvertretend lediglich ein einziges Pixel 11 dargestellt, welches ein lichtempfindiches Detektorelement in Form einer Photodiode umfasst, insbesondere einer sogenannten Pinned-Diode 15, die über eine Schalteinrichtung in Form eines Transfer-Transistors 39 mit einem Ausleseknoten 41 ladungsgekoppelt ist, der insbesondere als eine sogenannte Floating Diffusion (FD) ausgebildet ist,.

Der Ausleseknoten 41 ist mit dem Gate eines als Sourcefolger ausgebildeten Wandler-Transistors 43 verbunden, der eine Ladungs-Spannungs-Wandlerschaltung darstellt. Darüber hinaus ist der Ausleseknoten 41 über eine weitere Schalteinrichtung in Form eines Rücksetz-Transistors 45 mit einer positiven Spannungsversorgung 51 verbunden. Einer der beiden Kanalanschlüsse des Wandler-Transistors 43 ist ebenfalls mit der positiven Spannungsversorgung 51 verbunden, wohingegen der andere der beiden Kanalanschlüsse des Wandler-Transistors über einen Auswahl-Transistor 47, der als Zeilenauswahlschalter fungiert, mit einer dem dargestellten Pixel zugeordneten Spaltenleitung 17 verbindbar ist.

Die Spaltenleitung 17 ist dafür vorgesehen, die in einer zugehörigen Spalte angeordneten Pixel, insbesondere Pixel 11, mit einer gemeinsamen Spaltenausleseschaltung, beispielsweise Spaltenverstärkerschaltung 113 zu verbinden. Die Spaltenverstärkerschaltung 113 umfasst einen ersten Kondensator oder Referenzwert-Kondensator 127, der mit einem Anschluss gegen Masse geschaltet und mit dem anderen Anschluss über einen Schalter 149E wahlweise mit der Spaltenleitung 17 verbindbar ist. Die Spaltenverstärkerschaltung 113 umfasst ferner einen zweiten Kondensator oder Signalwert-Kondensator 133, der mit einem Anschluss ebenfalls gegen Masse geschaltet und mit dem anderen Anschluss über einen weiteren Schalter 149D ebenfalls wahlweise mit der Spaltenleitung 17 verbindbar ist.

Darüber hinaus umfasst die Spaltenverstärkerschaltung 113 einen Verstärker 131, an dessen negativem Eingang 137 die an dem ersten Kondensator 127 anliegende Spannung und an dessen positivem Eingang 135 die an dem zweiten Kondensator 133 anliegende Spannung angelegt wird.

Der Transfer-Transistor 139 ist über eine Steuerleitung TRF, der Rücksetz-Transistor 45 ist über eine Steuerleitung RES, der Auswahl-Transistor 47 ist über eine Steuerleitung SEL, der Schalter 149E ist über eine Steuerleitung S 1 und der Schalter 149D ist über eine Steuerleitung S2 von einer gemeinsamen Steuereinrichtung 153 des Bildsensors steuerbar.

Die Funktionsweise eines derartigen CMOS-Bildsensors ist grundsätzlich bekannt und ausführlich in der DE 10 2007 045 448 A1 beschrieben.

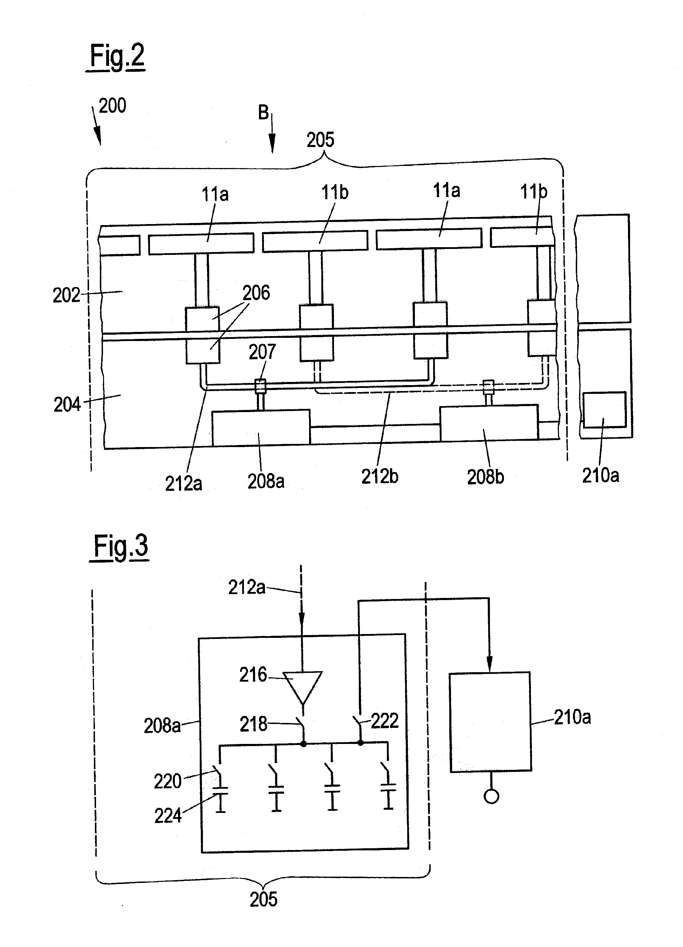

Ein erfindungsgemäßer CMOS-Bildsensor 200 wird nachfolgend nun mit Bezug auf Fig. 2 bis 4 beschrieben.

Der CMOS-Bildsensor 200 umfasst ein erstes Halbleiter-Substrat 202 und ein in Belichtungsrichtung B gesehen unterhalb des ersten Halbleiter-Substrats 202 angeordnetes zweites Halbleiter-Substrat 204 (Fig. 2). Die Halbleiter-Substrate 202, 204 sind miteinander verbunden. Bei dem ersten Halbleiter-Substrat 202 kann es sich um ein rückseitenbelichtetes Halbleiter-Substrat handeln, wie es eingangs bereits erläutert wurde.

Das erste Halbleiter-Substrat 202 weist eine Vielzahl von in Zeilen und Spalten angeordneten Pixeln 11a, 11b auf, die ein Bildfeld 205 des CMOS-Bildsensors 200 aufspannen und deren Aufbau dem Pixel 11 von Fig. 1 entspricht und daher hier nicht nochmals zu erläutert werden braucht. Die Pixel 11a, 11b sind verschiedenen Pixelgruppen zugeordnet, wobei nachfolgend exemplarisch nur zwei Pixelgruppen erwähnt sind.

Die Pixel 11a sind zu einer ersten Pixelgruppe zusammengefasst und über Kontaktierungen 206, welche an der Verbindungsstelle zwischen den beiden Halbleiter-Substraten 202, 204 vorgesehen sind, mit einer im zweiten Halbleiter-Substrat 204 vorgesehenen Gruppenleitung 212a verbunden (Fig. 2). Es versteht sich, dass die Gruppenleitung 212a alternativ auch im ersten Halbleiter-Substrat 202 vorgesehen werden kann. Zwischen dem jeweiligen Pixel 11 a und der Gruppenleitung 212a sind ferner ein jeweiliger Verbindungsschalter und eine zugeordnete Steuerleitung vorgesehen, um das jeweilige Pixel 11a wahlweise mit der Gruppenleitung 212a zu koppeln, wobei die Verbindungsschalter und die zugeordnete Steuerleitung der besseren Übersicht halber nicht dargestellt sind.

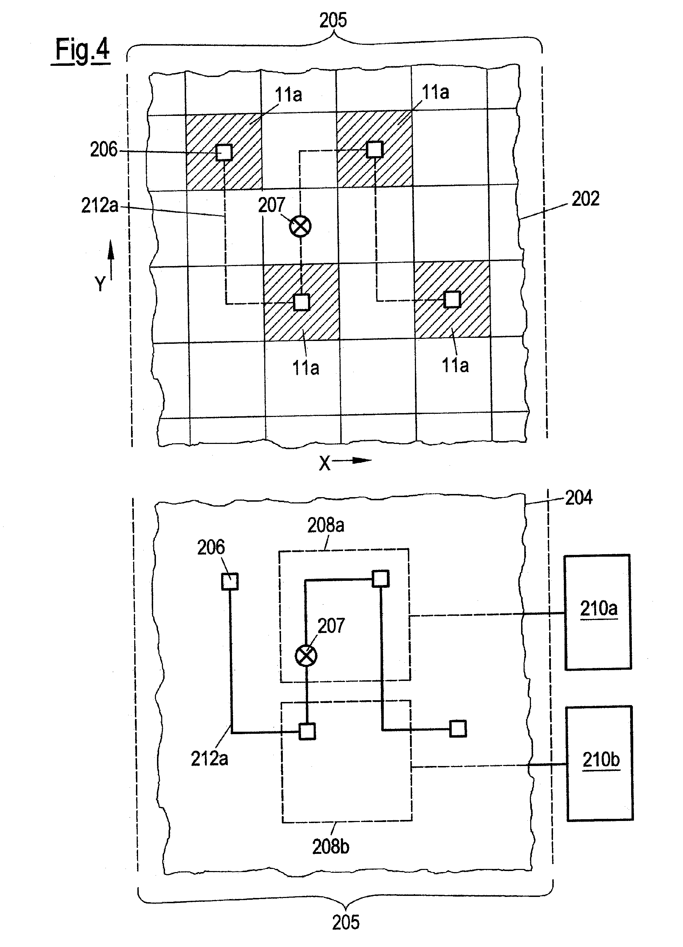

Die Gruppenleitung 212a ist gemäß Fig. 2 und 4 über eine Kontaktierung 207 mit einer ebenfalls im zweiten Halbleiter-Substrat 204 vorgesehenen Verstärkerschaltung 208a verbunden, deren Aufbau nachfolgend noch näher erläutert wird. Die Verstärkerschaltung 208a ist in Projektion entlang der Belichtungsrichtung B der Pixel 11a, 11b betrachtet innerhalb des Bildfelds 205 angeordnet. Die Verstärkerschaltung 208a ist mit einer außerhalb des Bildfeldes 205 angeordneten Auswerteschaltung 210a verbunden und bildet mit dieser eine Ausleseschaltung für die erste Pixelgruppe.

Eine zweite Pixelgruppe wird durch die Pixel 11b gebildet, welche über Kontaktierungen 206, Verbindungsschalter (nicht gezeigt) und eine gestrichelt dargestellte Gruppenleitung 212b mit einer Verstärkerschaltung 208b verbunden sind (Fig. 2 und 4). Die Verstärkerschaltung 208b ist wiederum mit einer Auswerteschaltung 210b verbunden (Fig. 4) und bildet mit dieser eine Ausleseschaltung, welche der zweiten Pixelgruppe zugeordnet ist.

Die Verstärkerschaltung 208a umfasst gemäß Fig. 3 mehrere Speicherkondensatoren 224, wobei jedem Pixel 11a ein bestimmter Speicherkondensator 224 zugeordnet ist. An dieser Stelle sei angemerkt, dass in Fig. 3 der Übersichtlichkeit halber nur die Speicherkondensatoren für die eigentlichen Bildsignale dargestellt sind. Falls mit dem erfindungsgemäßen CMOS-Bildsensor 200 das eingangs erläuterte Correlated Double Sampling durchgeführt werden soll, kann eine entsprechend erhöhte Anzahl von Speicherkondensatoren 224 und zugeordneter Schalter 220 vorgesehen sein.

Die Verstärkerschaltung 208a umfasst ferner einen Verstärker 216, der eingangsseitig mit der Gruppenleitung 212a verbunden ist. Über Schalter 218 und 220 kann ein jeweiliges Pixel 11a mit dem zugeordneten Speicherkondensator 224 verbunden werden. Die Schalter 220 und ein Schalter 222 sind zur wahlweisen Kopplung der Speicherkondensatoren 224 mit der Auswerteschaltung 210a vorgesehen.

Die jeweilige Verstärkerschaltung 208b ist analog zu der Verstärkerschaltung 208a aufgebaut.

Mit Bezug nun auf Fig. 4 wird nachfolgend die Art und Weise erläutert, in welcher die zu einer Pixelgruppe gehörenden Pixel 11a und auch alle übrigen einer jeweiligen Pixelgruppe zugeordneten Pixel 11a, 11b über das Bildfeld 205 verteilt sind. In der oberen Bildhälfte von Fig. 4 ist ein Ausschnitt des ersten Halbleiter-Substrats 202 in einer Draufsicht gezeigt (nur Bildfeld 205). In der unteren Bildhälfte ist ein entsprechender Ausschnitt des zweiten Halbleiter-Substrats 204 in einer Draufsicht gezeigt (Bildfeld 205 und Randabschnitt außerhalb des Bildfelds 205), wobei die beiden gezeigten Ausschnitte tatsächlich übereinander angeordnet sind.

Bei dem hier gezeigten Ausführungsbeispiel gleicht das Muster, mit dem die Pixel 11a verteilt und mit der Gruppenleitung 212a verbunden sind, den Zügen eines Springers beim Schachspiel. Der Abstand zwischen zwei benachbarten Pixeln 11a einer jeweiligen Pixelgruppe beträgt demnach in X-Richtung ein Pixel und in Y-Richtung zwei Pixel. Bei einem derartigen Muster ist eine Verschachtelung der Pixelgruppen problemlos möglich. So kann eine weitere Pixelgruppe gegenüber der die Pixel 11a umfassenden Pixelgruppe um ein Pixel in X-Richtung versetzt sein, während noch eine weitere Pixelgruppe um ein Pixel gegenüber der die Pixel 11 a umfassenden Pixelgruppe um ein Pixel in Y-Richtung versetzt sein kann.

Grundsätzlich können jedoch auch viele andere Muster zur Anwendung gelangen. Ebenso versteht es sich, dass auch die Anzahl von Pixeln je Pixelgruppe variiert werden kann. Anstelle der im Ausführungsbeispiel gezeigten vier Pixel je Pixelgruppe können zum Beispiel auch Pixelgruppen mit jeweils acht oder sechzehn Pixeln gebildet werden. Ferner ist es nicht zwingend erforderlich, dass die Muster für alle Pixelgruppen des Bildsensors 200 im Wesentlichen gleich sind, sondern es können auch völlig unterschiedliche Muster vorgesehen sein, die allerdings vorzugsweise alle dieselbe Anzahl von Pixeln umfassen.

Die Anordnungen der Pixel einer Pixelgruppe in Mustern, bei denen zwischen Pixeln einer Pixelgruppe Pixel einer anderen Pixelgruppe liegen, hat den Vorteil, dass bei einem Ausfall einer Ausleseschaltung keine großflächigen Artefakte im Bild entstehen können. Etwaige Ausfälle von Ausleseschaltungen können daher leichter mittels Interpolation kompensiert werden. Falls ein Bildsensor mit Bayer-Farbmaske zum Einsatz kommen soll, wird das Muster bzw. die Farbmaske so ausgewählt, dass benachbarte Pixel einer Pixelgruppe unterschiedliche Farben aufweisen.

Nachfolgend wird nun der Betrieb des erfindungsgemäßen CMOS-Sensors 200 erläutert. Während eines Belichtungsvorgangs werden die Pixel 11a der ersten Pixelgruppe sequentiell belichtet. Hierzu wird nacheinander ein jeweiliges Pixel 11a durch entsprechende Ansteuerung der genannten Verbindungsschalter mit der zugeordneten Gruppenleitung 212a verbunden, und der Ausgang des Verstärkers 216 wird durch entsprechende Ansteuerung der Schalters 220 mit dem dem jeweiligen Pixel 11 a zugeordneten Speicherkondensator 224 verbunden. Die in dem Pixel 11a akkumulierte Ladung wird in dem Pixel 11a in ein Spannungssignal umgewandelt, das Spannungssignal wird an den Verstärker 216 übertragen und das dort verstärkte Spannungssignal wird in dem zugeordneten Speicherkondensator 224 gespeichert. Dieser Vorgang wird nacheinander für alle Pixel 11 a der Pixelgruppe wiederholt.

Anschließend (oder alternierend hierzu) werden die in den Speicherkondensatoren 224 gespeicherten verstärkten Spannungssignale durch entsprechende Ansteuerung des Schalters 222 sequentiell an die Auswerteschaltung 210a übertragen. Die Auswerteschaltung 210a umfasst insbesondere eine Schaltung, welche prinzipiell der Spaltenverstärkerschaltung 113 von Fig. 1 entsprechen kann, so dass zusätzlich zu der Ladungs-Spannungs-Wandlung durch den jeweiligen Wandler-Transistor 43 (Fig. 1) und die Spannungsverstärkung durch den jeweiligen Verstärker 216 innerhalb des Bildfelds 205 eine weitere Spannungsverstärkung auf dem Bildsensor 200 ("on-chip") unmittelbar außerhalb des Bildfelds 205 erfolgt. Ferner können die Auswerteschaltungen 210a weitere Einrichtungen zur Verarbeitung der aus den Speicherkondensatoren 224 ausgelesenen Spannungssignale aufweisen, beispielsweise Analog-Digital-Wandler.

Das Auslesen der zweiten und weiterer Pixelgruppen erfolgt in entsprechender Weise, vorzugsweise simultan zum Auslesen der ersten Pixelgruppe.

Da das Verstärken und Zwischenspeichern der von den einzelnen Pixeln 11a, 11b erzeugten Spannungssignale in der Regel eine deutlich kürzere Zeitspanne beansprucht als das Auswerten der zwischengespeicherten verstärkten Spannungssignale in der Auswerteschaltung 210a bzw. 210b, ist es möglich, den zeitlichen Versatz der Belichtungen der Pixel einer Pixelgruppe im Vergleich mit einem im Rolling-Shutter-Modus betriebenen Bildsensor zu verringern.

Bei dem erfindungsgemäßen CMOS-Bildsensor 200 kann der beim Auslesen eines vollständigen Bildes akkumulierte zeitliche Versatz so weit verringert werden, dass er deutlich unter der Belichtungszeit liegt, beispielsweise weniger als ein Zehntel der Belichtungszeit beträgt. In diesem Fall ist nämlich die Bewegungsunschärfe eines bewegten Objekts so groß, dass diese die Artefakte maskiert, die durch den Versatz der Belichtungszeiten entstehen, sodass auf den Belichtungszeitversatz beruhende Verformungseffekte für den Betrachter nicht mehr wahrnehmbar sind.

Letztlich lassen sich mit dem erfindungsgemäßen CMOS-Bildsensor 200 die Vorteile eines im Rolling-Shutter-Modus betriebenen Bildsensors, wie einfacher Aufbau, hohe Empfindlichkeit und hohe Dynamik, mit den Vorteilen eines im Global-Shutter-Modus betriebenen Bildsensors kombinieren.

Anstelle der Verwendung eines ersten Halbleiter-Substrats 202 und eines hiervon ursprünglich separaten zweiten Halbleiter-Substrats 204 können die vorstehend beschriebenen Strukturen auch in verschiedenen Ebenen eines monolithischen Substrats vorgesehen sein.

### Bezugszeichenliste

- 11, 11a, 11b: Pixel
- 15: Pinned-Diode
- 17: Spaltenleitung
- 149D, 149E: Schalter
- 39: Transfer-Transistor
- 41: Ausleseknoten
- 43: Wandler-Transistor
- 45: Rücksetz-Transistor
- 47: Auswahl-Transistor
- 51: positive Versorgung
- 113: Spaltenverstärkerschaltung
- 127: Referenzwert-Kondensator
- 131: Verstärker
- 133: Signalwert-Kondensator
- 135: positiver Eingang
- 137: negativer Eingang
- 153: Steuereinrichtung
- 200: CMOS-Bildsensor
- 202: erstes Halbleiter-Substrat
- 204: zweites Halbleiter-Substrat
- 205: Bildfeld
- 206, 207: Kontaktierung
- 208a, 208b: Verstärkerschaltung
- 210a, 210b: Auswerteschaltung
- 212a, 212b: Gruppenleitung
- 216: Verstärker
- 218, 220, 222: Schalter
- 224: Speicherkondensator
- B: Belichtungsrichtung

## Patentansprüche

1. Bildsensor, insbesondere CMOS-Bildsensor (200), für elektronische Kameras,
mit einer Vielzahl von lichtempfindlichen Pixeln (11, 11a, 11b), die in Zeilen und Spalten eines Bildfeldes (205) angeordnet sind, wobei ein jedes Pixel (11, 11a, 11b) zumindest umfasst:
- ein lichtempfindliches Element (15), um aus entlang einer Belichtungsrichtung einfallendem Licht elektrische Ladung zu erzeugen, und
- einen Wandler-Transistor (43), um eine von dem lichtempfindlichen Element (15) erzeugte Ladung in ein Spannungssignal an einem Ausgang des Wandler-Transistors (43) umzuwandeln,
wobei die Pixel (11, 11a, 11b) mehrere Pixelgruppen bilden, wobei jeder Pixelgruppe mehrere Pixel (11, 11a, 11b) zugeordnet sind, und wobei den mehreren Pixeln (11, 11a, 11b) einer jeden Pixelgruppe zumindest eine gemeinsame Ausleseschaltung zugeordnet ist, welche mit dem Ausgang des jeweiligen Wandler-Transistors (43) der Pixel (11, 11a, 11b) der Pixelgruppe koppelbar ist und welche eine Verstärkerschaltung (208a, 208b) zur Erzeugung von verstärkten Spannungssignalen aus den Spannungssignalen umfasst,
**dadurch gekennzeichnet,**
**dass** die Verstärkerschaltung (208a, 208b) der jeweiligen Pixelgruppe in Projektion entlang der Belichtungsrichtung der Pixel betrachtet innerhalb des Bildfeldes (205) angeordnet ist.

2. Bildsensor nach Anspruch 1,
**dadurch gekennzeichnet,**
**dass** die jeweilige Verstärkerschaltung (208a, 208b) ferner für jedes Pixel (11, 11 a, 11b) der zugeordneten Pixelgruppe wenigstens eine Speichereinrichtung (224) zur Zwischenspeicherung der verstärkten Spannungssignale aufweist.

3. Bildsensor nach Anspruch 1 oder 2,
**dadurch gekennzeichnet,**
**dass** die jeweilige Ausleseschaltung ferner wenigstens eine Auswerteschaltung (210a, 210b) umfasst, welche zur Auswertung der verstärkten Spannungssignale ausgelegt ist.

4. Bildsensor nach Anspruch 3,
**dadurch gekennzeichnet,**
**dass** die Auswerteschaltung (210a, 210b) ferner zur weiteren Verstärkung der verstärkten Spannungssignale ausgelegt ist.

5. Bildsensor nach Anspruch 3 oder 4,
**dadurch gekennzeichnet,**
**dass** die Auswerteschaltung (210a, 210b) auf dem Bildsensor außerhalb des Bildfeldes (205) angeordnet ist.

6. Bildsensor nach einem der Ansprüche 3 bis 5,
**dadurch gekennzeichnet,**
**dass** die jeweilige Verstärkerschaltung (208a, 208b) ferner für jedes Pixel (11, 11 a, 11b) der zugeordneten Pixelgruppe wenigstens eine Speichereinrichtung (224) zur Zwischenspeicherung der verstärkten Spannungssignale aufweist, wobei die jeweilige Ausleseschaltung ferner eine Auswahlschaltung (220, 222) umfasst, um die Speichereinrichtungen der zugeordneten Pixelgruppe sequentiell mit der zugeordneten Auswerteschaltung (210a, 210b) zu koppeln und hierdurch die zwischengespeicherten verstärkten Spannungssignale sequentiell an die zugeordnete Auswerteschaltung (210a, 210b) auszugeben.

7. Bildsensor nach Anspruch 6,
**dadurch gekennzeichnet,**
**dass** der Bildsensor (200) eine der Anzahl der Pixelgruppen entsprechende Anzahl von Ausleseschaltungen mit einer jeweiligen Verstärkerschaltung (208a, 208b), einer jeweiligen Auswerteschaltung (210a, 210b) und einer jeweiligen Auswahlschaltung (220, 222) aufweist, wobei der Bildsensor (200) eine Steuereinrichtung aufweist, die dazu ausgelegt ist, zumindest einige der Ausleseschaltungen verschiedener Pixelgruppen simultan anzusteuern.

8. Bildsensor nach einem der vorhergehenden Ansprüche,
**dadurch gekennzeichnet,**
**dass** die Pixel (11, 11a, 11b) auf einem gemeinsamen ersten Halbleiter-Substrat (202) und die Verstärkerschaltungen (208a, 208b) auf einem gemeinsamen, mit dem ersten Substrat (202) verbundenen zweiten Halbleiter-Substrat (204) angeordnet sind.

9. Bildsensor nach Anspruch 8,
**dadurch gekennzeichnet,**
**dass** das zweite Halbleiter-Substrat (204) entlang der Belichtungsrichtung (B) der Pixel (11, 11a, 11b) unterhalb des ersten Halbleiter-Substrats (202) angeordnet ist.

10. Bildsensor nach Anspruch 8 oder 9,
**dadurch gekennzeichnet,**
**dass** das erste Halbleiter-Substrat (202) rückseitenbelichtet ist.

11. Bildsensor nach einem der vorhergehenden Ansprüche,
**dadurch gekennzeichnet,**
**dass** zwischen den Pixeln (11a) einer jeweiligen Pixelgruppe Pixel (11b) einer anderen Pixelgruppe angeordnet sind.

12. Bildsensor nach Anspruch 11,
**dadurch gekennzeichnet,**
**dass** zwischen den Pixeln (11a) der jeweiligen Pixelgruppe sowohl entlang einer Zeilenrichtung als auch entlang einer Spaltenrichtung Pixel (11b) einer anderen Pixelgruppe angeordnet sind.

13. Bildsensor nach einem der vorhergehenden Ansprüche,
**dadurch gekennzeichnet,**
**dass** jede Pixelgruppe eine Erstreckung von wenigstens zwei Pixeln in Spaltenrichtung und eine Erstreckung von wenigstens zwei Pixeln in Zeilenrichtung aufweist.

14. Bildsensor nach einem der vorhergehenden Ansprüche,
**dadurch gekennzeichnet,**
**dass** die Pixel (11, 11 a, 11b) einer jeden Pixelgruppe in einem Muster angeordnet sind, welches für alle Pixelgruppen des Bildsensors (200) gleich oder im Wesentlichen gleich ist.

15. Bildsensor nach einem der vorhergehenden Ansprüche,
**dadurch gekennzeichnet,**
**dass** jedes Pixel ferner umfasst:
- einen Ausleseknoten (41),
- einen Transfer-Transistor (39), um wahlweise das lichtempfindliche Element (15) mit dem Ausleseknoten (41) zu koppeln, und
- einen Rücksetz-Transistor (45), um wahlweise den Ausleseknoten (41) mit einem Rücksetzpotential (51) zu koppeln.
